# EUROPEAN PATENT APPLICATION

(11) **EP 1 749 647 A1**
(43) Date of publication of application: **07.02.2007**
(21) Application number: 06117706.9
(22) Date of filing: 24.07.2006
(51) Int. Cl.: B29D 30/06, B29D 30/48

(54) **Tire bead stretcher and method for holding a green tire**

(30) Priority: 29.07.2005 US 193579
(71) Applicant: THE GOODYEAR TIRE & RUBBER COMPANY, Akron, Ohio 44316-0001 (US)
(72) Inventor: Girard, Jean-Claude, Copley, OH 44321 (US); Hart, James Michael, Akron, OH 44319 (US)
(74) Representative: Kutsch, Bernd

(57) **Abstract**

Disclosed is a method and a device for handing tires to remove potential anomalies that can occurto a green tire bead portion during pre-cure handling or storing. The tire bead stretcher (100) orients the bead portions (14,16) of the green tire parallel to one another. The bead portions of the tire maintain the parallel position as the tire is loaded into a tire mold (200).

## Description

### Field of the Invention

The present invention is directed to a tire bead stretcher device. More particularly, the present invention is directed to a device that grabs green tires at both beads of the tires and precisely orients the tire beads prior to placing the green tire in a curing mold.

### Background of the Invention

In the vast majority of tire manufacturing, tires are built on tire building drums. During the building process, prior to applying a belt package to the carcass structure, and after the tire beads are applied to the building drum, the tire is expanded into a torodial configuration. The belt structure is then applied, and the green tread may or may not be applied while the green tire is on the building drum. At some point in the manufacture of the tire, prior to cure, the green tire is moved from the build area and placed on a storage rack.

There is a plurality of green tire storage rack configurations. There are sling racks that cradle the tire in a hammock-like apparatus. There are hook carts that hang the tire from a single tire bead. There are also bike rack type storage racks, wherein the green tires are placed in a vertical position and are held in place by bars at two locations on the lower part of the contact surface of the tire. Also known, but not widely used, is a flat table wherein the tires are placed in a horizontal position on a flat surface. A flat table storage rack may have holes cut into the surface so that the tire rests on its sidewalls and not on the beads.

One commonality of all of these storage devices is that the opposing bead rings are capable of movement and shifting from the built parallel configurations of the opposing beads. The longer the time between building and curing of the tire, the greater time there is for bead anomalies to occur in the bead.

### Summary of the Invention

The present invention is directed to method and a machine or device for handing tires to remove potential anomalies that can occur to a green tire bead portion during pre-cure handling or storing. The goal is to place the bead portions of the green tire parallel to one another. By placing the bead portions in parallel prior to curing, the green tire will hold this position as the tire is placed in the curing mold. The result is a tire with improved uniformity.

Disclosed herein is a method of manufacturing a cured tire according to claim 1.

In one aspect of the disclosed method, each opposing bead portion is supported at at least four locations along the circumferential length of the bead portion. Preferably, each bead portion is supported at at least six locations along the circumferential length of each bead portion. The exact number of support locations is dependent upon the size of the tire and the dimensions of the bead stretcher.

In another aspect of the disclosed method, orienting the opposing bead portions includes moving at least one bead portion. The bead portion may be moved towards or away from the first bead portion. The bead portions are oriented to be at a desired spacing from one another while maintaining the bead portions in parallel orientations.

In another aspect of the disclosed method, the loading of the green tire into the tire curing press occurs immediately after removal of the tire from the bead stretching machine. The method may also include the additional step of, prior to moving the green tire to a location adjacent to the curing press, moving the green tire to a storage location and storing the green tire for a length of time.

In another aspect of the method, only the opposing bead portions of the green tire are supported in the bead stretching machine such that the sidewalls and tread portions of the green tire are not supported. In another aspect of the method, the sidewalls and/or the tread portion may be supported to a limited degree.

In another aspect of the method, the green tire is oriented in the horizontal plane in the bead stretching machine such that the opposing bead portions are vertically spaced from one another.

Also disclosed herein is a tire bead stretching device for a green tire according to claim 5.

In one aspect of the tire bead stretcher, the first support means has at least four equally spaced paddles, the paddles having means at the outermost radial edges to support the first tire bead portion. The second support means also has at least four equally spaced paddles for maintaining the second tire bead portion. Preferably, both support means has at least six paddles for supporting the respective bead portions.

In another aspect of the tire bead stretcher, the paddles of the first support means are retractable. Also, the paddles of the second support means are both articulable and retractable.

### Brief Description of the Drawings

The invention will be described by way of example and with reference to the accompanying drawings in which:
FIG. 1 is a cross sectional view of a cured tire;
FIG. 2 is a cross sectional view of a tire in a mold;
FIG. 3 is a cross sectional view of a tire bead stretcher;
FIG. 4 is a view along line 4-4 of FIG. 3;
FIG. 5 is a view along line 5-5 of FIG. 3; and
FIG. 6 is an alternative paddle configuration.

### Detailed Description of the Invention

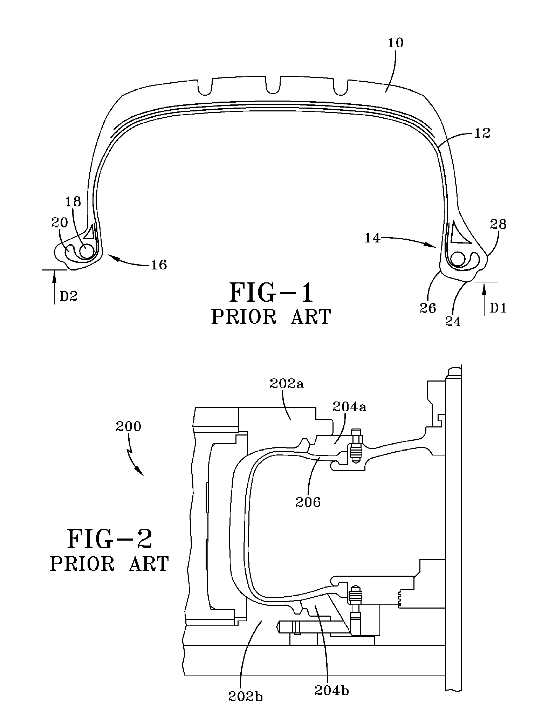

FIG. 1 illustrates a cured tire. The tire 10 has a carcass reinforcement ply 12 extending from one bead portion 14 to an opposing bead portion 16. In each bead portion 14, 16, the ends of the carcass reinforcement ply 12 pass radially under, and fold back under, a bead ring 18. To maintain the profile of the carcass reinforcement ply 12 in the bead portions 14, 16 as the ply 12 folds back under the bead ring 18, the ply 12 folds about a rubber wedge 20 located axially outward of the bead ring 18.

In the illustrated tire, the first bead portion 14 is defined by having a first diameter D1 less the diameter D2 of the second bead portion 16. The uneven bead diameters assists in mounting the tire when a tire support is also to be mounted on the wheel rim (elements not illustrated herein), as disclosed in US-B- 5,785,781.

Each bead portion has an outer cross-sectional profile wherein, as the profile moves from the axially outer side of the bead portion to the axially inner side, the bead profile slopes radially upward. In this tire, the bead toe 24 is both axially outward and radially inward of the bead heel 26. Above the bead toe 24 is a rib 28 that assists in locking the tire onto a wheel rim (not illustrated).

Because of the complex outer cross-sectional profile of the bead portions, the bead portions must be retained by a mold, or mold pieces, on three sides while in the tire mold. FIG. 2 is a simplified cross-section illustration of the tire 10 in a closed tire mold 200. The radially outer portions of the bead portions 14, 16 of the tire 10 are gripped by first mold sections 202a, 202b and the base of the bead portions 14, 16 are held in place by mold sections 204a, 204b. Details of the mold, its operation and how the mold locks the tire therein is disclosed in US-B- 6,854,963. After molds sections 202, 204 are closed, a bladder 206 is inflated to contact the underside of the tire 10; thereafter curing of the tire begins.

As previously discussed, the bead portions of a tire may go out of round or non-parallel during handling of the green tire following removal of the tire from the building drum and prior to placement of the green tire in the mold. Because the bead portions of the dual bead diameter tire 10 must be retained by multiple mold sections on multiple planes of the bead portions, if the bead portions are not parallel to one another and in the proper location as the green tire is placed in the mold, the bead portions may be pinched in the mold. This can result in tire non-uniformity. To remove potential anomalies that can occur to a green tire bead portion during pre-cure handling or storing, the present invention is directed toward orienting the bead portions of the green tire so that the bead portions are parallel to one another. The green tire is held in this oriented, bead parallel position prior to the tire being placed in the curing mold.

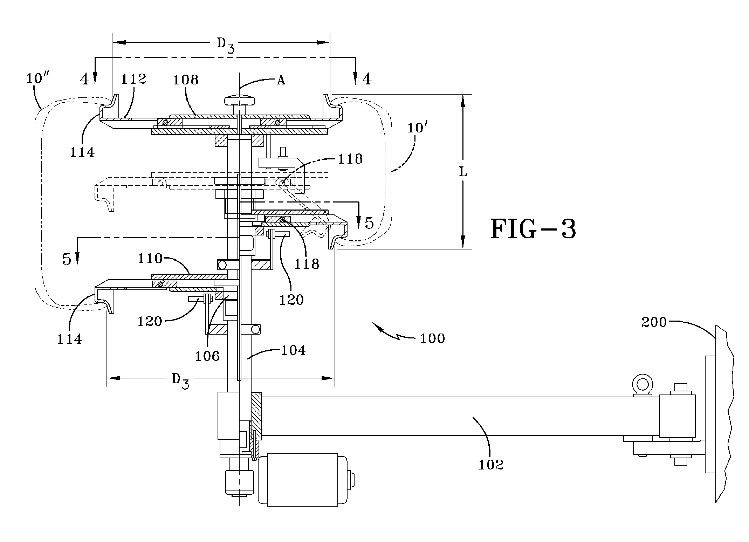

The goal of the present invention is achieved by use of a tire bead stretcher, see FIG. 3. Preferably, the stretcher 100 is mounted next to the tire mold at a tire curing station. In the embodiment illustrated, the stretcher is mounted on the outside of the tire mold 200 via an arm 102. At the opposite end of the arm 102 is a spindle 104 having mounted thereon a guide system 106 and a pair of support means 108, 110. In the illustrated stretcher 100, each side of the stretcher 100 is illustrated to show a different sized tire 10', 10" being supported.

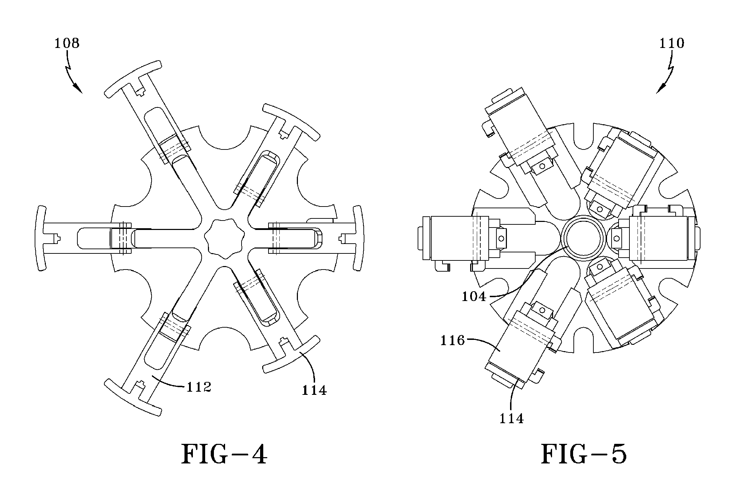

The first support means 108 supports one of the bead portions of the green tire, while the second support means 110 supports the second bead portion of the green tire. The first support means 108 has a fixed position relative to the spindle 104. To support the circumferential length of the tire bead portion, the support means 108 has at least four paddles 112 equally spaced around the spindle 104; preferably, there are at least six paddles 112, see FIG. 4. The number of paddles is dependent upon the size of the tires to be cured. As the tire bead diameter increases, the top support means 104 increases in diameter, creating a greater circumferential length about the support means 104, creating more room for additional paddles 112. Additionally, as the tire size increases, a greater number of paddles is desired to provide greater support to the tire bead portion.

The paddles 112 of the top support means 104 are retractable towards a central axis A of the bead stretcher 100. The retractable aspect of the paddles 112 assists in removal of the green tire from the tire bead stretcher 100 and also permits a range of tire sizes to be mounted on a single tire bead stretcher 100. At the edge of each paddle is a retaining ledge 114, upon which the bead portion sits when the tire is mounted in the tire bead stretcher 100.

The second support means 110 is moveably mounted on the spindle 104. The second support means 110 has at least four paddles 116; preferably at least six paddles 116, see FIG. 5. The paddles 116 are articulable around a pivot point 118. Using gravity to assist in the articulation, the paddles 116 pivot downwards about pivot point 118, though, if desired, the paddles 116 may pivot upwards toward the first support means 108. FIG. 3 illustrates, in shadow, one of the paddles 116 articulated. The paddles 116 are also retractable towards the central axis A of the tire bead stretcher. The paddles 116 have a retaining ledge 114 upon the radially outer edge of each paddle.

The retraction of both sets of paddles 116, 118, and the articulation of the second set of paddles 118 is preferably electronically controlled. Located adjacent to the second set of paddles 118 is a proximity switch 120. The proximity switch 120 is used to control the distance between the first and second support means 108, 110.

The following set-up description is applicable for when the central axis A of the tire bead stretcher 100 is vertically oriented; the tire bead stretcher 100 may alternatively be mounted next to the mold 200 so the central axis A is horizontally oriented. When the tire bead stretcher 100 is empty, the paddles 112 of the first support means 108 are extended so that a distance D3 is approximately equivalent to the smaller tire bead diameter D1. The second support means is raised so that a distance L between the edges of the paddle ledges is less than the desired cross sectional width of the green tire. The paddles 116 may be collapsed via the pivot point 118, or extending outward to give the support means 110 an effective diameter less than the diameter D2 of the tire 10.

The tire is lowered onto the tire bead stretcher 100 wherein the first bead portion 14 engages the retaining ledges 114 of the paddles 112. After the first bead portion 14 is securely engaged, the paddles 116 are expanded radially outward from the stretcher central axis A until the effective diameter D4 of the second support means 110 is approximately equivalent to the bead portion diameter D2 of the tire. The outward movement of the paddles 116 may include raising the paddles 116 if the paddles 116 are initially collapsed when the tire 10 is lowered onto the bead stretcher 100. The second support means 110 is then moved away from the first support means 108 until the desired cross-sectional width of the green tire is achieved. As the first and second support means 108, 110 are parallel to one another, the supported bead portions 14, 16 are oriented into parallel positions relative to one another.

The green tire is held in the parallel oriented position in the tire bead stretcher 100 as a previously held tire is cured in the tire mold 200. Thus, the green tire is held for a minimum of at least five minutes. After the previous tire is removed from the mold 200, the green tire 10 is removed from the tire bead stretcher 100, the tire loader grasping the green tire by the tire side having the smaller diameter bead portion 14. During removal of the green tire 10, the second support means 110 is raised and the paddles 116 are collapsed so that the second bead portion 16 is disengaged from the second support means 110. The paddles 112 may also be retracted to prevent any bumping or interference with the second bead portion 16.

By holding the green tire 10 in a fixed, oriented position for a period of time, Applicants believe that during movement of the green tire from the bead stretcher 100 to the mold 200, any further movement of the lower bead portion 16 will be minimal, and the green tire 10 will be placed in the tire mold 200 with the bead portions 14, 16 in substantially the same parallel position. As the tire mold portions close, the bead portion 16 is properly oriented and will not be pinched or improperly located during curing of the tire. As the placed green tire is being cured, a new green tire is placed in the tire bead stretcher.

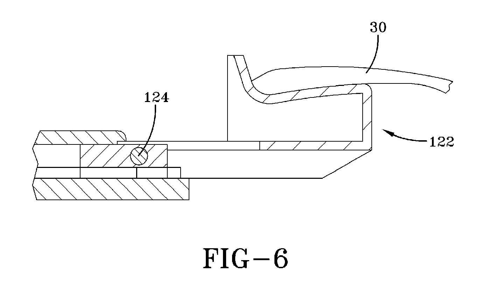

In the illustrated tire bead stretcher 100, only the first bead portion 14 is shown as being supported by the paddles 112. If the green tire has a large sidewall or a thick tread portion, it may be desired to have the adjacent sidewall 30 also supported to prevent the weight of the green tire from distorting the sidewalls or tread of the green tire while the tire is on the bead stretcher 100. To support the adjacent sidewall, the configuration of the paddles may be varied. The paddle 122 of FIG. 6 has a longer profile that supports the underside of both a bead portion and an adjacent sidewall. Due to the longer profile, such a paddle 122 may also articulate around a pivot point 124 to permit the opposing bead portion to be mounted on the tire bead stretcher 100 without bumping the paddle 122. Alternatively, a third support element may be mounted on the central spindle 104, located between the first and second support means 108, 110, that is retractable and has means to support and hold the central portion of the green tire.

## Claims

1. A method of manufacturing a cured tire comprising the steps of:
a) building a green tire, the green tire having a pair of opposing bead portions (14, 16);
b) placing the green tire on a bead stretching device (100), wherein both opposing bead portions are supported by the bead stretching device;
c) orienting the opposing beads into parallel positions relative to one another by means of the bead stretching device (100);
d) loading the green tire from the bead stretching device (100) into a tire curing press (200); and
e) curing the green tire to form a cured tire.

2. The method of claim 1, wherein each opposing bead portion is supported at at least four locations along the circumferential length of the bead portion.

3. The method of either claim 1 or 2, wherein orienting the opposing bead portions includes moving at least one bead portion.

4. The method of at least one of the above claims, wherein only the opposing bead portions (14, 16) of the green tire are supported in the bead stretching device (100).

5. The method of at least one of the above claims wherein the green tire is oriented in the horizontal plane in the bead stretching device (100) such that the opposing bead portions (14, 16) are vertically spaced from one another.

6. A tire bead stretching device, the device comprising:
(i) a first support (108), the first support (108) having means to support a first tire bead portion of a green tire, the green tire having opposing first and second tire bead portions, in a predetermined orientation, and
(ii) a second support (110), the second support (110) having means to support the second and opposing tire bead portion;
(iii) wherein the first and second supports (108, 110) are parallel to each other and spaced from one another by a defined distance.

7. The device of claim 6, wherein either the first support means (108) comprises at least four equally spaced paddles (112), the paddles having means at the outermost radial edges to support the first tire bead portion or the second support means (110) comprises at least four equally spaced paddles (116), the paddles having means at the outermost radial edges to support the second tire bead portion.

8. The device of claim 7, wherein the paddles (112) of the first support means (108) are retractable.

9. The device of either claim 7 or 8, wherein the paddles (116) of the second support means (110) are articulable or retractable.

10. The device of at least one of the previous claims 5-9, wherein the first and second support means (108, 110) are spaced from one another along a spindle (104), and at least one of the support means is capable of traveling along the length of the spindle (104) to vary a spacing between the first support means and the second support means.
